**Europäisches Patentamt**

**European Patent Office**

**Office européen des brevets**

(19)

(11) Numéro de publication : **0 505 228 B1**

(12) # FASCICULE DE BREVET EUROPEEN

(45) Date de publication du fascicule du brevet :
**18.11.93 Bulletin 93/46**

(51) Int. Cl.⁵ : **B01J 2/16, B01J 8/36, B01J 8/38**

(21) Numéro de dépôt : **92400570.5**

(22) Date de dépôt : **05.03.92**

(54) **Procédé et dispositif de production de granulés sur lit fluidisé.**

(30) Priorité : **22.03.91 FR 9103492**

(43) Date de publication de la demande :
**23.09.92 Bulletin 92/39**

(45) Mention de la délivrance du brevet :
**18.11.93 Bulletin 93/46**

(84) Etats contractants désignés :
**AT BE CH DE DK ES FR GB GR IT LI LU NL PT SE**

(56) Documents cités :
**DE-A- 3 523 990**
**FR-A- 2 238 532**
**US-A- 3 408 746**
**US-A- 3 454 263**

(73) Titulaire : **THÜRING S.A.R.L.**
**13, Avenue de la République**
**F-60000 Beauvais (FR)**

(72) Inventeur : **Thüring, Paul**
**13, avenue de la République**
**F-60000 Beauvais (FR)**

(74) Mandataire : **Colas, Jean-Pierre et al**
**Cabinet de Boisse 37, avenue Franklin D. Roosevelt**
**F-75008 Paris (FR)**

## Description

L'invention concerne un procédé de production de granulés dit THÜRING-INCRO, ainsi qu'un dispositif pour sa mise en oeuvre.

Plus particulièrement, l'invention vise à fournir un procédé de production de granulés d'une grosseur comprise dans un intervalle granulométrique désiré, dite taille marchande, à partir d'amorces de taille plus petite par dépôt de couches successives d'une substance qui peut être la même que celle constituant les amorces ou qui peut être différente de celle-ci.

Le dépôt des couches nécessaires sur les amorces s'opère par pulvérisation sur celles-ci d'une substance qui peut être à l'état fondu ou sous forme d'une solution ou d'une dispersion dans un milieu liquide, tel que l'eau. Les amorces peuvent être générées en dehors du dispositif de granulation proprement dit, par exemple à partir d'une partie des granulés de taille marchande ou de granulés trop gros produits par le procédé que l'on broie et tamise pour obtenir des amorces de taille appropriée. Bien entendu, il faut disposer initialement d'une certaine quantité d'amorces pour initier le processus de production.

Plus précisément, l'invention concerne un procédé de formation de granulés de taille marchande à partir d'amorces de taille plus petite par dépôt sur lesdites amorces de couches successives d'une substance de grossissement choisie parmi une substance à l'état fondu, de solution ou de dispersion, caractérisé en ce qu'il consiste :

a) à créer un lit fluidisé d'amorces comportant une zone d'alimentation en amorces située à une extrémité du lit fluidisé et une zone d'évacuation de granulés située à l'autre extrémité dudit lit fluidisé, ce lit fluidisé étant incliné latéralement de façon que des amorces s'écoulent de la partie haute vers la partie basse du lit fluidisé et, de là, dans une auge adjacente à la partie basse du lit fluidisé,

b) à prévoir une trémie de réception des granulés adjacente à la partie haute du lit fluidisé mais séparée de celle-ci par une barrière de hauteur appropriée, sauf à l'endroit de la zone d'évacuation,

c) à projeter les amorces tombant dans l'auge en direction de ladite barrière tout en leur faisant traverser une zone de pulvérisation de la substance de grossissement, les amorces revêtues de la substance pulvérisée retombant sur la partie haute du lit fluidisé,

d) à convertir la substance déposée par pulvérisation sur les amorces en une couche solide par solidification de la substance à l'état fondu, ou bien par cristallisation de la substance dissoute et/ou par élimination du milieu liquide de la substance à l'état de solution ou de dispersion appliquée sur lesdites amorces pendant que les amorces s'écoulent de la partie haute du lit fluidisé vers l'auge en utilisant de l'air froid ou chaud, selon le cas, pour fluidiser le lit, et à projeter les granulés résultants tombant dans l'auge tout en les faisant progresser en direction de la zone d'évacuation, la vitesse et l'orientation de la projection étant telles que les granulés ayant atteint la taille marchande passent, pour leur plus grande part, par-dessus la barrière pour tomber dans la trémie et que les granulés plus fins passent, pour leur plus grande part, à travers la zone de pulvérisation, et retombent sur le lit fluidisé,

e) à répéter de multiples fois l'étape d) sur les granulés retombant sur le lit fluidisé après chaque projection,

f) à faire passer dans la trémie les granulés n'ayant pas franchi la barrière au cours d'une des étapes précédentes par la zone d'évacuation du lit fluidisé, et

g) à soumettre les granulés recueillis dans la trémie au cours des étapes d ), e ) ou f ) à une opération de tamisage en vue de séparer les granulés de taille marchande des autres.

Lorsque la matière de grossissement pulvérisée est une matière à l'état fondu, on produira le lit fluidisé à l'aide d'air à température ambiante ou peu élevée pour refroidir et, ainsi, provoquer la solidification de cette matière sur les amorces ou granulés en cours de formation.

Lorsque la matière de grossissement est sous forme d'une solution chaude ou froide, non saturée, saturée ou sursaturée d'une substance cristallisable à une température définie et connue, on pourra provoquer la cristallisation de cette substance sur les amorces par évaporation du solvant de la solution chaude ou froide appliquée sur les amorces en utilisant, pour former le lit fluidisé, de l'air chaud mais à une température inférieure à celle de la température de cristallisation de la substance à l'état anhydre, cet air chaud assurant en même temps l'évaporation du solvant et la cristallisation de la substance.

L'invention concerne aussi un dispositif pour la mise en oeuvre du procédé de l'invention. Plus précisément, l'invention concerne un dispositif de formation de granulés de taille marchande à partir d'amorces de taille plus petite par dépôt sur lesdites amorces de couches successives d'une substance de grossissement choisie parmi une substance à l'état fondu, de solution ou de dispersion, caractérisé en ce qu'il comprend :

- une enceinte pourvue à sa partie supérieure d'une hotte et dans laquelle sont prévus :
  - un ensemble de formation d'un lit fluidisé d'amorces à granuler et de granulés en cours d'élaboration comportant une sole perforée latéralement inclinée et une chambre située sous ladite sole et alimentée en air froid ou chaud sous pression,

- une auge adjacente à la partie basse de la sole pour recevoir les amorces ou les granulés tombant du lit fluidisé,
- une trémie de réception des granulés disposée le long de la partie haute de la sole inclinée, ledit ensemble, ladite auge et ladite trémie occupant toute la partie inférieure de ladite enceinte,
- une goulotte d'alimentation en amorces à faire grossir prévue à une extrémité de la sole perforée,
- une barrière de hauteur appropriée prévue entre la partie haute de la sole perforée et la trémie et interrompue au voisinage de l'extrémité de la sole perforée opposée à ladite goulotte,
- une rampe de pulvérisation de la substance de grossissement dont les buses sont dirigées vers la partie haute de la sole perforée, disposée en-dessous du sommet de la barrière, et
- des moyens de projection des amorces ou granulés tombant dans l'auge, la force et l'orientation de la projection étant telles que les granulés ayant atteint la taille marchande passent, pour leur plus grande part, par-dessus la barrière pour tomber dans la trémie et que les granulés plus fins passent, pour leur plus grande part, dans la zone de pulvérisation de la rampe de pulvérisation et retombent sur le lit fluidisé tout en progressant en direction de la zone d'évacuation,

et

- des moyens de tamisage des granulés recueillis dans la trémie en vue de séparer les granulés de taille marchande des autres.

Selon un mode de réalisation particulier, les moyens de projection, qui assurent en même temps la progression des granulés dans le granulateur, consistent en un ensemble rotatif constitué d'une pluralité de groupes de pelles déflectrices orientables et portées par un arbre dont la vitesse de rotation est réglable, ledit ensemble étant disposé à l'aplomb de l'auge et de façon que les extrémités des pelles viennent à proximité de la paroi de l'auge au cours de la rotation de l'arbre.

L'angle d'inclinaison de la sole perforée sera choisi en fonction de la densité des granulés à produire. A titre indicatif, cet angle d'inclinaison sera typiquement compris entre 2 et 10°, les angles les plus grands convenant pour des granulés de forte densité et les angles les plus petits pour des granulés de faible densité. L'utilisation d'une sole à inclinaison réglable entre dans le cadre de l'invention.

Egalement, de façon avantageuse, le dispositif de l'invention présente une ou plusieurs des particularités suivantes :

- un transporteur d'évacuation des granulés hors de l'enceinte, prévu à la partie inférieure de l'auge, destiné à permettre d'évacuer de l'enceinte les granulés pouvant y subsister, par exemple lorsqu'on désire changer le type de granulés à produire,
- l'enceinte comporte une porte permettant d'accéder à son intérieur, pour faciliter son entretien ou sa maintenance,
- l'enceinte comporte des trappes d'accès à la rampe de pulvérisation pour faciliter par exemple un débouchage des buses de pulvérisation,
- des panneaux amovibles sont prévus sur les parties intérieures de l'enceinte, susceptibles d'être en contact avec les granulés,, pour faciliter le nettoyage de l'enceinte,
- des moyens d'acheminement des granulés sont associés à la trémie, en vue d'acheminer les granulés aux moyens de tamisage.

Enfin le dispositif de l'invention peut être complété par certaines installations annexes, comme décrit ci-après à propos du mode de réalisation illustré par les dessins.

Le procédé et le dispositif de l'invention conviennent notamment pour effectuer :

- la granulation d'éléments, de sels et de produits fondus comme, par exemple, l'urée, le soufre, le nitrate d'ammonium, le nitrate de calcium, la soude, etc..,
- la granulation de solutions ou de bouillies chargées en produits minéraux ou organiques comme, par exemple, des solutions saturées ou sursaturées de sucre, de sulfate d'ammonium, de phosphates d'ammonium, d'engrais binaires ou ternaires,
- le grossissement de granulés existants à l'aide d'une solution ou d'une bouillie de même composition comme, par exemple, le grossissement de prills d'urée, de granulés de nitrate, etc..,
- l'arrondissement de produits concassés tels que les grains obtenus à partir d'un procédé de compactage, par une bouillie fabriquée à partir des poussières récupérées dans des installations de dépoussiérage,
- l'enrobage continu de grains ou de particules existants à l'aide d'une bouillie ou d'une solution de nature différente comme, par exemple, l'enrobage d'urée par du soufre, l'enrobage d'engrais PK par de l'urée ou par un nitrate, l'enrobage de noisettes ou d'amandes par du chocolat, etc..

Le procédé et/ou le dispositif de l'invention offrent les avantages suivants :

- possibilité d'évacuer l'air sortant du lit sans en changer la direction pour ne pas perturber l'avance des granulés,

- possibilité d'évacuer l'air à des vitesses faibles pour ne pas entraîner les particules trop fines,
- possibilité de permettre en tous points du granulateur l'évacuation des granulés ayant atteint la taille marchande,
- possibilité d'atteindre les pulvérisateurs de la matière de grossissement de l'extérieur sans avoir à entrer dans le granulateur,
- possibilité de pouvoir vider le granulateur en quelques minutes,
- possibilité de pouvoir entretenir l'état de la sole du lit en entrant dans le granulateur debout dans une position normale et confortable.

La description qui va suivre, faite en se référant aux dessins annexés, fera bien comprendre l'invention. Sur les dessins :

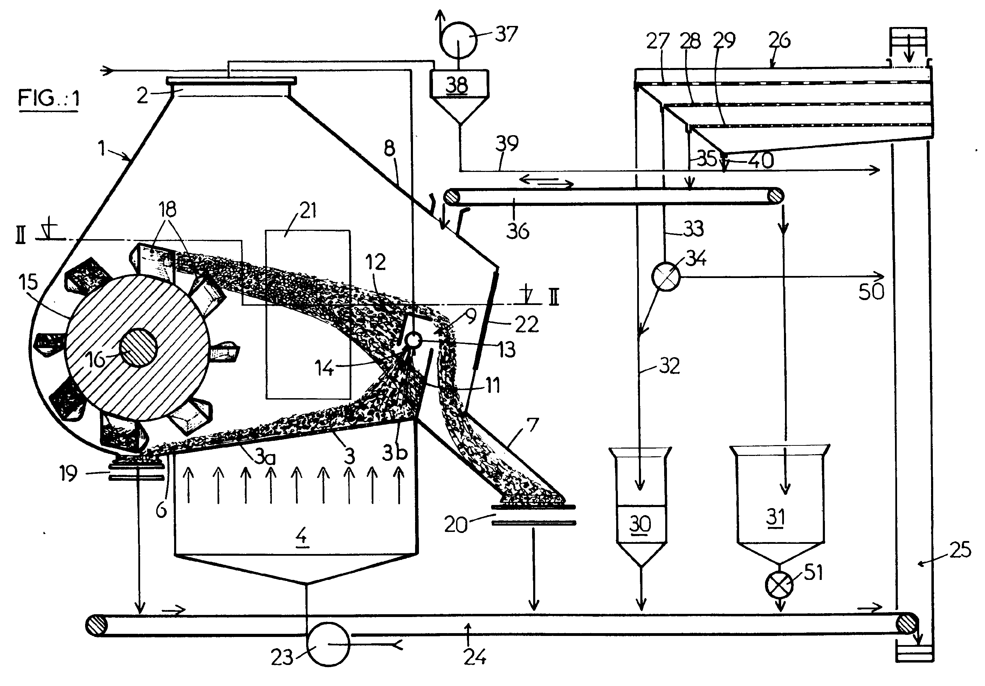

la figure 1 est une vue schématique d'un dispositif selon l'invention, vu en coupe transversale, et d'installations annexes; et

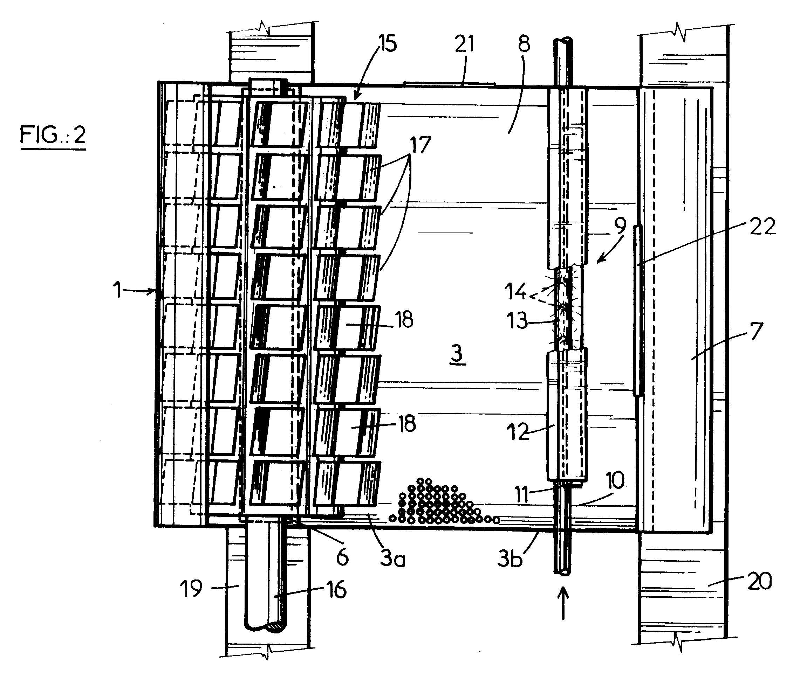

la figure 2 est une vue en coupe, selon la ligne II-II de la figure 1, du dispositif de la figure 1, sans les installations annexes.

Le dispositif illustré comprend :

- une enceinte 1 pourvue d'une hotte 2 à sa partie supérieure et dans laquelle sont prévus :
    - un ensemble de formation de lit fluidisé comportant une sole perforée 3, inclinée latéralement, et une chambre 4 située sous cette sole et pouvant être alimentée en air froid (c'est-à-dire à température ambiante) ou chaud, sous pression,
    - une auge 6 adjacente à la partie basse 3a de la sole,
    - une trémie 7 disposée le long de la partie haute 3b de la sole,
    ces ensembles, auge et trémie, occupant toute la partie inférieure de l'enceinte,
- une goulotte 8 d'alimentation en amorces situées à une extrémité de la sole,
- une barrière 9 de hauteur appropriée, éventuellement réglable, prévue entre la partie haute 3b de la sole et la trémie et interrompue en 10, au voisinage de l'extrémité de la sole opposée à la goulotte, cette barrière étant constituée d'une paroi 11 et d'un capot 12,
- une rampe de pulvérisation 13 dont les buses 14 sont dirigées vers la partie haute 3b de la sole, disposée entre la paroi 11 et le capot 12,
- un ensemble rotatif 15, à vitesse de rotation réglable, comportant un arbre 16 sur lequel sont montées une pluralité de groupes 17 de pelles déflectrices 18, cet ensemble rotatif étant disposé à l'aplomb de l'auge 6 et de façon que les extrémités des pelles viennent à proximité de la paroi de l'auge au cours de la rotation de l'arbre,
- un transporteur 19 prévu à la partie inférieure de l'auge 6,
- un transporteur 20 prévu à la partie inférieure de la trémie 7 pour envoyer les granulés tombés dans la trémie vers une installation de tamisage,
- une porte 21 d'accès à l'enceinte,
- des trappes 22 d'accès à la rampe de pulvérisation.

Le dispositif comprend également les organes suivants :

- un ventilateur 23 relié à l'atmosphère ou à une source d'air chaud (non représentée) et alimentant la chambre 4 en air sous pression,
- un transporteur 24 sur lequel les transporteurs 19 et 20 déversent les granulés qu'ils transportent,
- un élévateur 25 recueillant les granulés transportés par le transporteur 24 et les acheminant à un crible 26,
- un crible 26 à trois tamis superposés 27, 28 et 29, le premier tamis 27 retenant les granulés de taille supérieure à la taille marchande désirée, le second tamis 28 retenant les granulés de taille marchande, et le troisième tamis 29 retenant les granulés de taille inférieure à la taille marchande mais supérieure à une taille minimale donnée,
- un broyeur 30 dont le produit broyé est déversé sur le transporteur 24,
- une cuve d'attente 31 dont le contenu peut être déversé, si désiré, sur le transporteur 24,
- un conduit 32 pour acheminer les granulés refusés par le tamis 27 au broyeur 30,
- un conduit 33 permettant d'acheminer, par l'intermédiaire d'une vanne à trois voies 34, les granulés de taille marchande refusés par le tamis 28 soit à une installation de finition ou d'emballage (non représentée), soit au broyeur 30,
- un conduit 35 pour acheminer les granulés de taille inférieure à la taille marchande mais supérieur à une taille minimale donnée, refusés par le tamis 29, sur un transporteur 36 à sens de défilement inversable, ce dernier permettant d'acheminer lesdits granulés soit dans la goulotte 8 pour les recycler en tant qu'amorces, soit à la cuve d'attente 31,
- un ventilateur d'extraction 37 relié à la hotte 2 pour extraire l'air de l'enceinte 1 par l'intermédiaire d'un cyclone 38 permettant de séparer l'air des poussières entraînées,
- un conduit 39 d'évacuation des poussières séparées dans le cyclone, et
- un conduit 40 reliant la base du crible 26 au conduit 38 pour joindre les fines ayant traversé le tamis 29 aux poussières provenant du cyclone et les évacuer, par exemple à la cuve de préparation de la substance de grossissement.

Le fonctionnement de ce dispositif sera maintenant décrit eu égard à la formation de granulés par pulvérisation d'une substance de grossissement constituée d'une solution chaude d'une substance cristallisable sur des amorces, la cristallisation de la substance sur les amorces résultant à la fois tant d'un effet de refroidissement de la solution appliquée sur les amorces que d'un effet d'évaporation du solvant. Par le terme "amorces", on désigne aussi bien les amorces n'ayant pas encore reçu un dépôt de la substance de grossissement que les granulés de taille inférieure à la taille marchande sortant du dispositif de granulation et recyclés au dispositif.

La mise en route d'une opération de granulation exige en premier lieu la mise en circulation d'amorces initiales pour remplir le circuit et la formation d'un lit fluidisé de ces amorces sur la sole au moyen d'air sous pression et à une température inférieure à la température de la solution chaude de la substance de grossissement cristallisable afin d'exercer sur celle-ci un effet de refroidissement favorisant la cristallisation de cette substance lorsqu'elle est appliquée par pulvérisation sur les amorces, mais néanmoins relativement élevée pour favoriser l'évaporation du solvant (eau) de ladite solution chaude. Ces amorces peuvent provenir par exemple de la récupération d'amorces d'une fabrication précédente ou peuvent être produites à partir de granulés de taille marchande ou supérieure par concassage dans le broyeur 30 et criblage dans le crible 26 de l'installation (les amorces étant les granulés refusés par le tamis 29). La granulométrie des amorces est choisie en fonction de la granulométrie des granulés de taille marchande désirée. A titre indicatif, pour des granulés d'une taille marchande de 3-5 mm, les amorces peuvent avoir une granulométrie de 0,8 à 3 mm. Les amorces inférieures à 0,8 mm grossissent mal et peuvent perturber l'opération de granulation. Elles sont donc évacuées par le conduit 40 et remises en solution dans l'installation (non représentée) de préparation de la solution à pulvériser.

La proportion d'amorces introduites dans la goulotte 8 doit être constante et régulière. Si les granulés sortant du dispositif de granulation étaient trop riches en granulés de taille marchande et la proportion d'amorces sortant du dispositif venait donc à être insuffisante pour assurer à elle seule l'alimentation du dispositif en amorces, il serait nécessaire d'en créer artificiellement en prélevant une partie des granulés de taille marchande par actionnement de la vanne 34 pour les envoyer au broyeur 30 en vue de les broyer, le broyat étant ensuite criblé en 26 pour séparer les amorces, et ces dernières étant recyclées, en même temps que les amorces sortant du dispositif, à la goulotte 8, via le conduit 35 et le transporteur 36.

Le débit d'alimentation en amorces dépend de la fabrication à effectuer et est déterminé expérimentalement pour chaque fabrication. La quantité d'amorces amenées à la goulotte 8 par le transporteur 36 est pesée en continu et ajustée en continu par un prélèvement automatique et régulé des granulés de taille marchande, si nécessaire, comme cela vient d'être décrit. Au cas où trop d'amorces parviennent sur le transporteur 36, le sens de défilement de ce dernier est inversé pour qu'il déverse les amorces dans la trémie d'attente 31, en vue de leur utilisation ultérieure.

Le débit d'alimentation en amorces est défini par le taux de recyclage qui est le rapport en poids du poids d'amorces introduites dans le dispositif par heure, au poids de substance de grossissement pulvérisée sur ces amorces par heure. A titre d'exemples, on peut utiliser un taux de recyclage de 0,8 à 1 pour la formation de granulés à partir d'une solution aqueuse chaude de nitrate d'ammonium à 98-99% en poids ou d'une solution aqueuse d'urée à 99,6% en poids, et un taux de recyclage de 3 à 5 pour la formation de granulés à partir d'une solution aqueuse d'un sel à 50% en poids.

Dès que le circuit du dispositif est chargé en amorces au taux de recyclage désiré, on peut commencer à pulvériser la substance de grossissement par la rampe de pulvérisation 13. Le débit de pulvérisation est amené progressivement au taux nominal sur une période de 15 à 30 minutes environ. Les amorces tombant de la sole dans l'auge 6 sont prises par les pelles 18 et projetées en direction de la barrière 9 à une vitesse, et donc selon une trajectoire, qui dépend de la vitesse de rotation de l'arbre 16. Par un réglage approprié de la vitesse de rotation de l'arbre 16, on peut faire en sorte que les amorces et/ou granulés en cours de formation de taille inférieure à la taille marchande désirée suivent une trajectoire telle qu'ils viennent dans leur majeure partie heurter la barrière 9 et reçoivent, avant de retomber sur le lit fluidisé, la substance de grossissement pulvérisée par les buses de la rampe 13, tandis que les granulés ayant atteint la taille marchande désirée suivent une trajectoire telle qu'ils passent dans leur majeure partie par-dessus la barrière et viennent tomber dans la trémie 7. Les amorces ou granulés, ayant reçu la pulvérisation et retombant sur la partie haute du lit fluidisé, sont soumis à l'action de l'air de fluidisation jusqu'à ce qu'ils retombent dans l'auge 6, ce qui a pour effet de cristalliser la substance pulvérisée reçue sous forme d'une couche solide. Ce processus de projection, pulvérisation, cristallisation est répété de multiples fois sur les granulés en cours de formation jusqu'à ce qu'ils atteignent la taille marchande et soient préférentiellement éjectés dans leur majeure partie dans la trémie par les pelles. Il est à noter que les pelles entraînées en rotation ne sont pas parallèles à l'arbre rotatif mais forment un petit angle par rapport à celui-ci, de façon à faire avancer, à chaque projection, les granulés en cours de formation vers la zone où la barrière est interrompue, de sorte que tous les granulés en cours de formation, n'ayant pas été éjectés par dessus la barrière, soient finalement projetés dans la trémie lors d'une opération de projection ultime lorsqu'ils sont projetés dans la zone terminale où la barrière est interrompue.

Les granulés tombés dans la trémie sont évacués par le transporteur 20, tombent du transporteur 20 sur le transporteur 24, sont repris, au bout du transporteur 24, par l'élévateur 25 qui les déversent sur le crible 26 à trois tamis superposés. Sur le premier tamis 27, on récupère les granulés trop gros et on les dirige par le conduit 32 au broyeur 30 pour les convertir en amorces. A la sortie du broyeur 30, les amorces sortant du broyeur sont déposées sur le transporteur 24 qui les ramène, via l'élévateur 25, au crible 26. Sur le deuxième tamis 28, on récupère les granulés de taille marchande et on achemine ces derniers par le conduit 33 en direction d'une vanne à trois voies 34 qui, selon sa position, permet de diriger les granulés de taille marchande soit vers une installation 50 d'emballage ou de finition, si ces granulés doivent encore subir certains traitements (tels que, par exemple, refroidissement, séchage complémentaire, revêtement final) pour acquérir les qualités exigées du produit final, soit vers le broyeur 30 en vue de produire des amorces à partir de ces granulés, si cela s'avère nécessaire pour maintenir le taux de recyclage désiré. Sur le troisième tamis 29, on récupère les granulés de taille inférieure à la taille marchande mais supérieurs par exemple à 1 mm et les amorces provenant du broyeur 30 et on les dirige par le conduit 35 au transporteur 36 qui soit les recycle en tant qu'amorces à la goulotte 8, soit, si le taux de recyclage est trop élevé, les achemine dans la trémie d'attente 31 d'où elles pourront ultérieurement être déversées sur le transporteur 24 pour être recyclées, via une vanne 51. Sous le troisième tamis 29, on récupère les fines (particules de taille inférieure à 1 mm, par exemple) et on les envoie par les conduits 40 et 39, par exemple vers une cuve (non représentée) de préparation de la solution à pulvériser, pour y être redissous.

La vanne 34, le sens de défilement du transporteur 36, et la vanne 51 peuvent être commandés automatiquement en fonction du débit d'amorces arrivant à la goulotte 8 et du taux de recyclage désiré.

Par ailleurs, de l'air est extrait en continu de l'enceinte 1 par la hotte 2 sous l'action du ventilateur 37 de façon à maintenir sensiblement constante la pression d'air dans l'enceinte. L'air extrait passe dans un cyclone 38 en vue de le débarrasser des poussières entraînées. Les poussières recueillies sont envoyées dans le conduit 39, comme les fines sortant du crible, pour être redissoutes dans la cuve de préparation de la solution à pulvériser.

Lorsqu'il faut vidanger le dispositif de granulation pour un changement de fabrication, un entretien ou pour toute autre raison, cette vidange s'effectue très facilement, le lit fluidisé étant en marche et la pulvérisation et l'arbre rotatif étant stoppés, en mettant en route le transporteur 19 situé au fond de l'auge et en orientant le sens de défilement du transporteur 36 en direction de la trémie d'attente 31. Le transporteur 19 évacue les amorces ou granulés qui étaient en cours de formation au fur et à mesure qu'ils tombent de la sole dans l'auge et le transporteur 36 évacue les amorces et les petits granulés vers la trémie d'attente d'où ils peuvent être remis en circulation pour reprendre la fabrication ultérieurement ou mis en sacs pour constituer une réserve d'amorces devant servir à une reprise de la fabrication suivant la même formule. Bien entendu, pendant la vidange, la vanne 34 est positionnée de façon à évacuer vers 50 les granulés de taille marchande éventuellement présents dans l'enceinte.

Par ailleurs, la porte 21 fournit un accès facile à l'enceinte pour l'entretien ou la réparation de la machine. De leur côté, les trappes 22 permettant facilement d'accéder aux buses de la rampe de pulvérisation pour permettre leur débouchage éventuel.

On donne ci-après quelques exemples de conditions opératoires indicatives pour deux opérations de granulation typiques :

1) granulation d'urée :

Concentration de la solution pulvérisée    99,3 à 99,8% en poids

Température de la solution pulvérisée       138°C environ

Température de recyclage des amorces        70 à 90°C

Température de l'air du lit fluidisé        30°C environ

Taux de recyclage                          0,8 à 1,0

Température des granulés à la sortie
du crible                                  80 à 100°C

Débit d'air                                1,5 à 2,5 m³/kg d'urée

Humidité de l'urée granulée                < 0,2%

Granulométrie de l'urée marchande:
     - entre 3 et 5 mm                     95 %
     - entre 2 et 3 mm                     5 % maximum

Dureté du grain                            > à 2 kg

2) Granulation de sulfate d'ammonium à partir d'une solution aqueuse à 50% en poids (solution classique de récupération de sulfate d'ammonium dans les centrales thermiques et électriques) :

Concentration de la solution pulvérisée    50 % en poids

Température de la solution pulvérisée       90/100°C

Température de recyclage des amorces        80/90°C

Température de l'air du lit fluidisé        200/220°C

Taux de recyclage                          4 à 5

Température des granulés à la sortie
du crible                                  80°C

Débit d'air                                20 m³/kg de sulfate

Granulométrie de $SO_4(NH_4)_2$ :

     - entre 2,0 et 3,5 mm                 95 %
     - entre 1,5 et 2   mm                 5 %

Dureté du grain                            > 1,5 kg

Humidité                                   < à 0,25 %

Le procédé et le dispositif de l'invention permettent :
- l'obtention de granulés très résistants en raison de leur structure périphérique constituée de couches successives,

7

- l'obtention de granulés très ronds et lisses,
- de permettre une conduite automatique de la granulation,
- de permettre un taux de recyclage relativement faible,
- d'obtenir un haut rendement thermique grâce à l'efficacité du contact air-amorces dans le lit fluidisé.

En outre, le dispositif est d'une conception simple, donc peu onéreuse, et facile à entretenir.

## Revendications

1.  Un procédé de formation de granulés de taille marchande à partir d'amorces de taille plus petite par dépôt sur lesdites amorces de couches successives d'une substance de grossissement choisie parmi une substance à l'état fondu, de solution ou de dispersion, caractérisé en ce qu'il consiste :

    a) à créer un lit fluidisé d'amorces comportant une zone d'alimentation en amorces située à une extrémité du lit fluidisé et une zone d'évacuation de granulés située à l'autre extrémité dudit lit fluidisé, ce lit fluidisé étant incliné latéralement de façon que des amorces s'écoulent de la partie haute vers la partie basse du lit fluidisé et, de là, dans une auge adjacente à la partie basse du lit fluidisé,

    b) à prévoir une trémie de réception des granulés adjacente à la partie haute du lit fluidisé mais séparée de celle-ci par une barrière de hauteur appropriée, sauf à l'endroit de la zone d'évacuation,

    c) à projeter les amorces tombant dans l'auge en direction de ladite barrière tout en leur faisant traverser une zone de pulvérisation de la substance de grossissement, les amorces revêtues de la substance pulvérisée retombant sur la partie haute du lit fluidisé,

    d) à convertir la substance déposée par pulvérisation sur les amorces en une couche solide par solidification de la substance à l'état fondu, ou bien par cristallisation de la substance dissoute et/ou par élimination du milieu liquide de la substance à l'état de solution ou de dispersion appliquée sur lesdites amorces, pendant que les amorces s'écoulent de la partie haute du lit fluidisé vers l'auge en utilisant de l'air froid ou chaud, selon le cas, pour fluidiser le lit, et à projeter les granulés résultants tombant dans l'auge tout en les faisant progresser en direction de la zone d'évacuation, la vitesse et l'orientation de la projection étant telles que les granulés ayant atteint la taille marchande passent, pour leur plus grande part, par-dessus la barrière pour tomber dans la trémie et que les granulés plus fins passent, pour leur plus grande part, à travers la zone de pulvérisation, et retombent sur le lit fluidisé,

    e) à répéter de multiples fois l'étape d) sur les granulés retombant sur le lit fluidisé après chaque projection,

    f) à faire passer dans la trémie les granulés n'ayant pas franchi la barrière au cours d'une des étapes précédentes par la zone d'évacuation du lit fluidisé, et

    g) à soumettre les granulés recueillis dans la trémie au cours des étapes d), e) ou f) à une opération de tamisage en vue de séparer les granulés de taille marchande des autres.

2.  Un dispositif de formation de granulés de taille marchande à partir d'amorces de taille plus petite par dépôt sur lesdites amorces de couches successives d'une substance de grossissement choisie parmi une substance à l'état fondu, de solution ou de dispersion, caractérisé en ce qu'il comprend :

    - une enceinte 1 pourvue à sa partie supérieure d'une hotte 2 et dans laquelle sont prévus :
    - un ensemble de formation d'un lit fluidisé d'amorces à granuler et de granulés en cours d'élaboration comportant une sole perforée 3 latéralement inclinée et une chambre 4 située sous ladite sole et alimentée en air froid ou chaud sous pression,
    - une auge 6 adjacente à la partie basse 3a de la sole pour recevoir les amorces ou les granulés tombant du lit fluidisé,
    - une trémie 7 de réception des granulés disposée le long de la partie haute 3b de la sole inclinée, ledit ensemble, ladite auge 6 et ladite trémie 7 occupant toute la partie inférieure de ladite enceinte,
    - une goulotte 8 d'alimentation en amorces à granuler prévue à une extrémité de la sole perforée,
    - une barrière 9 de hauteur appropriée prévue entre la partie haute de la sole perforée et la trémie et interrompue au voisinage de l'extrémité de la sole perforée opposée à ladite goulotte,
    - une rampe de pulvérisation 13 de la substance de grossissement dont les buses 14 sont dirigées vers la partie haute 3b de la sole perforée, disposée en-dessous du sommet de la barrière, et
    - des moyens de projection des amorces ou granulés tombant dans l'auge, la force et l'orientation de la projection étant telles que les granulés ayant atteint la taille marchande passent, pour leur plus grande part, par-dessus la barrière pour tomber dans la trémie et que les granulés plus fins passent, pour leur plus grande part, dans la zone de pulvérisation de la rampe de pulvérisation et retombent sur le lit fluidisé tout en progressant en direction de la zone d'évacuation,

EP 0 505 228 B1

et
- des moyens de tamisage 26 des granulés recueillis dans la trémie en vue de séparer les granulés de taille marchande des autres.

3. Un dispositif selon la revendication 2, caractérisé en ce que les moyens de projection consistent en un ensemble rotatif 15 constitué d'une pluralité de groupes 17 de pelles déflectrices 18 portées par un arbre 16 dont la vitesse de rotation est réglable, ledit ensemble étant disposé à l'aplomb de l'auge et de façon que les extrémités des pelles viennent à proximité de la paroi de l'auge au cours de la rotation de l'arbre.

4. Un dispositif selon la revendication 2 ou 3, caractérisé en ce qu'il comprend, en outre, un transporteur d'évacuation 19 des granulés hors de l'enceinte, prévu à la partie inférieure de l'auge 6.

**Patentansprüche**

1. Ein Verfahren zur Herstellung von Granulaten von verkaufsfähiger Größe aus Ausgangspartikeln kleinerer Größe durch Ablagerung auf diesen Ausgangspartikeln von aufeinanderfolgenden Schichten einer Vergrößerungssubstanz, die aus einer Substanz in geschmolzenem Zustand, im Lösungszustand oder im Dispersionszustand ausgewählt ist, dadurch gekennzeichnet, daß es darin besteht,
   a) daß ein Wirbelbett von Ausgangspartikeln erzeugt wird, das eine an einem Ende des Wirbelbetts gelegene Zone zur Speisung mit Ausgangspartikeln und eine am anderen Ende des Wirbelbetts gelegene Granulatabfuhrzone besitzt, wobei dieses Wirbelbett seitlich geneigt ist, so daß Ausgangspartikel vom oberen Teil des Wirbelbettes zum unteren Teil und von dort in eine an den unteren Teil des Wirbelbetts angrenzende Mulde abfließen,
   b) daß ein Bunker zur Aufnahme der Granulate vorgesehen wird, der an den oberen Teil des Wirbelbetts angrenzt, jedoch von diesem, außer an der Stelle der Abfuhrzone, durch eine Sperrwand von geeigneter Höhe getrennt ist,
   c) daß die in die Mulde fallenden Ausgangspartikel in Richtung auf die Sperrwand geschleudert werden, indem man sie eine Zone der Zerstäubung der Vergrößerungssubstanz durchqueren läßt, wobei die mit der zerstäubten Substanz beschichteten Ausgangspartikel auf den oberen Teil des Wirbelbetts fallen,
   d) daß die auf die Ausgangspartikel durch Zerstäubung aufgebrachte Substanz durch Verfestigung der Substanz im geschmolzenen Zustand oder durch Kristallisierung der gelösten Substanz und/oder durch Beseitigung des flüssigen Mediums der auf diese Ausgangspartikel aufgebrachten Substanz im Lösungs- oder Dispersionszustand in eine feste Schicht umgewandelt wird, während die Ausgangspartikel vom oberen Teil des Wirbelbetts auf die Mulde zu strömen, indem zur Fluidisierung des Betts je nach Fall Kaltluft oder Heißluft verwendet wird, und daß die entstandenen, in die Mulde fallenden Granulate geschleudert werden, indem sie in Richtung auf die Abfuhrzone vorbewegt werden, wobei die Schleudergeschwindigkeit und die Schleuderrichtung so gewählt sind, daß die Granulate, die die verkaufsfähige Größe erreicht haben, zu ihrem größten Teil über die Sperrwand gelangen, um in den Bunker zu fallen, und daß die feineren Granulate zu ihrem größten Teil die Zerstäubungszone durchqueren und auf das Wirbelbett zurückfallen,
   e) daß der Schritt d) an den nach jedem Schleudern auf das Wirbelbett herabfallenden Granulaten zahlreiche Male wiederholt wird,
   f) daß die Granulate, die in den vorhergehenden Schritten die Sperrwand nicht passiert haben, über die Abfuhrzone des Wirbelbetts in den Bunker durchgelassen werden und
   g) daß die während der Schritte d), e) oder f) im Bunker aufgenommenen Granulate einer Siebung unterzogen werden, um die Granulate mit verkaufsfähiger Größe von den anderen zu trennen.

2. Eine Vorrichtung zur Herstellung von Granulaten von verkaufsfähiger Größe aus Ausgangspartikeln kleinerer Größe durch Ablagerung auf diesen Ausgangspartikeln von aufeinanderfolgenden Schichten einer Vergrößerungssubstanz, die aus einer Substanz im geschmolzenen Zustand, im Lösungszustand oder im Dispersionszustand ausgewählt ist, dadurch gekennzeichnet, daß sie umfaßt:
   - einen Behälter (1), der in seinem oberen Teil mit einem Abzug (2) versehen ist und in dem vorgesehen sind:
   - eine Einheit zur Bildung eines Wirbelbetts von zu granulierenden Ausgangspartikeln und in Herstellung begriffenen Granulaten, die eine perforierte, seitlich geneigte Sohle (3) und eine unter dieser Sohle gelegene Kammer (4) umfaßt, die mit kalter oder heißer Luft unter Druck gespeist ist,

9

- eine an den unteren Teil (3A) der Sohle angrenzende Mulde (6) zur Aufnahme der vom Wirbelbett herabfallenden Ausgangspartikel oder Granulate,
- einen Bunker (7) zur Aufnahme der Granulate, der längs des oberen Teils (3B) der geneigten Sohle angeordnet ist,
- wobei diese Einheit, diese Mulde (6) und dieser Bunker (7) den ganzen unteren Teil des Behälters einnehmen,
- eine Rinne (8) zur Speisung mit zu granulierenden Ausgangspartikeln, die an einem Ende der perforierten Sohle vorgesehen ist,
- eine Sperrwand (9) geeigneter Höhe, die zwischen dem oberen Teil der perforierten Sohle und dem Bunker vorgesehen ist und in Nähe des der Rinne entgegengesetzten Endes der perforierten Sohle unterbrochen ist,
- ein Rohr (13) zur Zerstäubung der Vergrößerungssubstanz, dessen Düsen (14) auf den oberen Teil (3B) der perforierten Sohle zu gerichtet sind und das unter dem Scheitel der Sperrwand angeordnet ist,
- Mittel zum Schleudern der in die Mulde fallenden Ausgangspartikel oder Granulate, wobei die Schleuderkraft und die Schleuderrichtung so gewählt sind, daß die Granulate, die die verkaufsfähige Größe erreicht haben, zu ihrem größten Teil über die Sperrwand gelangen, um in den Bunker zu fallen, und daß die kleineren Granulate zu ihrem größten Teil in die Zerstäubungszone des Zerstäubungsrohrs gelangen und auf das Wirbelbett zurückfallen, wobei sie sich in Richtung auf die Abfuhrzone vorbewegen, und
- Mittel (26) zum Sieben der vom Bunker aufgenommenen Granulate zum Zweck der Trennung der Granulate mit verkaufsfähiger Größe von den anderen.

3. Eine Vorrichtung nach Anspruch 2, dadurch gekennzeichnet, daß die Schleudermittel aus einer rotierenden Einheit (15) bestehen, die aus mehreren Gruppen (17) von Ablenkschaufeln (18) gebildet ist, die von einer Welle (16) mit verstellbarer Drehgeschwindigkeit getragen sind, wobei die Einheit senkrecht über der Mulde und so angeordnet ist, daß die Enden der Schaufeln während der Drehung der Welle in die Nähe der Wand der Mulde gelangen.

4. Eine Vorrichtung nach Anspruch 2 oder 3, dadurch gekennzeichnet, daß sie außerdem einen Förderer (19) zur Abfuhr der Granulate aus dem Behälter umfaßt, der im unteren Teil der Mulde (6) vorgesehen ist.


## Claims

1. A process for forming granules of commercial size from smaller nuclei by depositing, on the said nuclei, successive layers of an enlarging substance chosen from amongst substances in the molten state, in solution or in dispersion, characterised in that it consists of:

a) creating a fluidised bed of nuclei having a nucleus feed area situated at one end of the fluidised bed and a granule discharge area situated at the other end of the said fluidised bed, this fluidised bed sloping laterally so that nuclei flow from the upper part to the lower part of the fluidised bed and, from there, into a trough adjacent to the lower part of the said fluidised bed,

b) providing a granule reception hopper adjacent to the upper part of the fluidised bed but separated from it by a barrier of suitable height, except at the place where the discharge area is located,

c) projecting the nuclei falling into the trough in the direction of the said barrier whilst causing them to pass through an area in which the enlarging substance is sprayed, the nuclei covered with the sprayed substance falling once again onto the upper part of the fluidised bed,

d) converting the substance deposited by spraying onto the nuclei into a solid layer by solidification of the substance in the molten state, or else by crystallisation of the dissolved substance and/or by elimination of the liquid medium of the substance in solution or dispersion applied to the said nuclei, whilst the nuclei are flowing from the upper part of the fluidised bed towards the trough, using cold or hot air, depending on the case, to fluidise the bed, and projecting the resulting granules falling into the trough whilst causing them to move in the direction of the discharge area, the speed and orientation of the projection being such that the granules which have attained commercial size pass, for the most part, over the barrier and fall into the hopper, and the finer granules pass, for the most part, through the spraying area and fall once again onto the fluidised bed,

e) repeating stage d) many times on the granules falling back onto the fluidised bed after each projection,

f) causing to pass into the hopper the granules which have not passed over the barrier during one of the previous stages through the discharge area of the fluidised bed, and

g) subjecting the granules collected in the hopper during stages d), e) or f) to a sieving operation for the purpose of separating the granules of commercial size from the others.

2. A device for forming granules of commercial size from smaller nuclei by depositing, on the said nuclei, successive layers of an enlarging substance chosen from amongst substances in the molten state, in solution or in dispersion, characterised in that it comprises:
    - a enclosure 1 provided at its top with a cowl 2 and in which are provided:
    - a unit for forming a fluidised bed of nuclei to be formed into granules and of granules in the course of formation, having a laterally sloping, perforated floor 3 and a chamber 4 situated below the said floor and fed with cold or hot air under pressure,
    - a trough 6 adjacent to the lower part 3a of the floor for receiving the nuclei or granules falling from the fluidised bed,
    - a hopper 7 for receiving the granules, disposed along the upper part 3b of the sloping floor,
    the said unit, the said trough 6 and the said hopper 7 occupying all the lower part of the said enclosure,
    - a spout 8 for feeding nuclei to be formed into granules, provided at one end of the perforated floor,
    - a barrier 9 of suitable height provided between the upper part of the perforated floor and the hopper and interrupted in the vicinity of the end of the perforated floor opposite to the said spout,
    - a manifold 13 for spraying the enlarging substance, the nozzles 14 of which are directed towards the upper part 3b of the perforated floor, disposed below the top of the barrier, and
    - means for projecting the nuclei or granules falling into the trough, the force and orientation of the projection being such that the granules which have attained commercial size pass, for the most part, over the barrier and fall into the hopper, and such that the finer granules pass, for the most part, into the spray manifold spraying area and fall once again onto the fluidised bed whilst moving in the direction of the discharge area,
    and
    - means 26 for sieving the granules collected in the hopper for the purpose of separating the granules of commercial size from the others.

3. A device according to Claim 2, characterised in that the projection means consist of a rotary assembly 15 formed by a plurality of groups 17 of deflector scoops 18 carried by a shaft 16, the speed of rotation of which is adjustable, the said assembly being disposed directly above the trough and in such a way that the ends of the scoops come close to the wall of the trough during the rotation of the shaft.

4. A device according to Claim 2 or 3, characterised in that it also comprises a conveyor 19 for discharging the granules from the enclosure, provided at the lower part of the trough 6.

FIG.:1

FIG.:2